# EUROPEAN PATENT SPECIFICATION

(11) **EP 0 230 703 B1**
(45) Date of publication and mention of the grant of the patent: **17.03.1993**
(21) Application number: 86300437.0
(22) Date of filing: 22.01.1986
(51) Int. Cl.: C08L 67/02

(54) **Impact modified polybutylene terephthalate resin molding compositions**
Schlagstärkenmodifizierte Polybutylenterephthalatzusammensetzungen
Compositions à mouler de polytéréphtalate de butylène à résistance au choc modifiée

(43) Date of publication of application: 05.08.1987
(73) Proprietor: ARCO Chemical Technology, L.P., Wilmington, Delaware 19801 (US)
(72) Inventor: Dean, Barry D., Broomall PA, 19008 (US)
(74) Representative: Cropp, John Anthony David

(56) References cited:
- EP-A- 0 107 303
- EP-A- 0 127 452
- EP-A- 0 135 677
- DATABASE W.P.I.L., no. 86-127212; JP-A-61 037 838 (ATLANTIC RICHFIELD CO.) 22-02-1986

## Description

This invention relates to polybutylene terephthalate resins.

More specifically, this invention relates to impact modified polybutylene terephthalate resin containing molding compositions.

In one of its more specific aspects, this invention pertains to a polybutylene terephthalate resin based molding composition having excellent impact properties obtained by incorporating thereinto an ethylene/propylene/diene rubber which is highly grafted with a copolymer of an α-substituted acrylate with acrylic or methacrylic acid or a mixture thereof.

Techniques for improving the impact resistance of polybutylene terephthalate resins are known. For example, improved impact strength is obtained by melt compounding polybutylene terephthalate with ethylene homo-and copolymers functionalized with either acid or ester moeities as taught in U. S. Pat. Nos. 3,405,198; 3,769,260; 4,327,764; and 4,364,280. Moreover, U.S. Pat. 4,320,212 teaches modification of polyesters by blending with a polycarbonate and with elastomeric, acrylate copolymers. Polyblends of polybutylene terephathalate with a styrene/α-olefin/styrene triblock are taught in U.S. Pat. 4,119,607. And, U.S. Pat. 4,172,859 teaches impact modification of polybutlyene terephthalate with random ethylene/acrylate copolymers and EPDM rubbers grafted with a monomeric ester or acid functionality.

EP 0 127 452 discloses impact resistant blends of poly (1,4 butylene terephthalate) resin and a graft copolymer of styrene and acrylonitrile on an ethylene-propylene-non-conjugated diene terpolymer rubber spine.

EP 0 107 303 discloses high impact strength blends of (a) polyester resin, (b) polycarbonate resin and (c) graft copolymer of EPDM type rubber with at least one polar monomer. The polar monomer is selected from one or more of styrene, acrylonitrile and methyl methacrylate.

EP 0 135 677 discloses thermoplastic resin compositions comprising a blend or (a) a high molecular weight polyester resin and (b) ethylene-propylene homopolymer or copolymer of monethylenically unsaturated monomers having a phenyl, carbonyl or cyano group attached to the vinyl carbon. Exemplified are blends of poly (1,4-butylene terephthalate) and styrene acrylonitrile grafted ethylene-propylene-diene terpolymer.

The present invention provides a method for enhancing the impact resistance of polybutylene terephthalate resins upon molding.

According to this invention, there is provided a moldable composition comprising
(i) a polyester resin
(ii) an elastomer other than ethylene-propylene-ethylidene norbornene elastomer grafted with a copolymer of monoethylenically unsaturated monomers, and optionally,
(iii) a reinforcing filler
characterised in that the polyester (i) is a polybutylene terephthalate polyester or a copolyester derived from 1,4-butane diol and terephthalic acid and one or more of isophthalic acid, ethylene glycol, 1,3-propane diol and 2,2-bis-(4-hydroxyphenyl)propane and the elastomer (ii) is grafted with from about 40 to 60 weight percent of a copolymer comprising 70 to 95% of an α-substituted acrylate and 5 to 30% acrylic acid, methacrylic acid or a mixture thereof and wherein said elastomer has random dialkyl or alkyl aryl peroxide functionality and said copolymer is thermodynamically miscible with the polybutylene terephthalate resin or copolyester, said composition comprising 99 to 50% by weight of (i) and 1 to 50% by weight of (ii).

Also according to this invention, there is provided a method of producing a molded composition which comprises forming a blend comprising a polyester resin (i) and an elastomer (ii) grafted with a copolymer of monoethylenically unsatured monomers, said polyester and elastomer grafted with a copolymer of monoethylenically unsaturated monomers being as defined above, and molding the resulting blend.

Also according to this invention, there is provided a molded composition comprising a continuous phase comprising a polyester resin (i) and a disperse phase within the continuous phase, the disperse phase comprising an elastomer (ii) grafted with a copolymer of monoethylenically unsaturated monomers, said polyester and elastomer grafted with monoethylenically unsaturated monomers being as defined above, said copolymer being thermodynamically miscible with said polyester resin and being part of the continuous phase, and said elastomer grafted copolymer being present in the polybutylene terephthalate resin in an amount sufficient to improve the impact resistance of the polybutylene terephthalate resin upon molding.

According to this invention, there is also provided a method of improving the impact resistance of a polyester resin upon molding which comprises incorporating into a continuous phase comprising polyester resin, a disperse phase comprising an elastomer grafted with a copolymer of monoethylenically unsaturated monomers, said copolymer being thermodynamically miscible with said polyester resin and being part of the continuous phase, and said elastomer grafted with copolymer being incorporated in an amount sufficient to improve the impact resistance of the polybutylene terephthalate resin upon molding.

Two or more polymers are said to be thermo-dynamically miscible when the free energy of mixing is negative and, thermodynamic miscibility is said to exist when a mixture of two or more polymers results in a material exhibiting a single, well defined glass transition temperature.

The polybutylene terephthalate resin used in the examples which follow was Valox 325 polybutylene terephthalate resin commercially available from General Electric Company. When used herein the term "polybutylene terephthalate resin" means a polybutylene terephthalate or a copolyester derived from 1,4-butanediol and terephthalic acid and one or more of isophthalic acid, ethylene glycol, 1,3 propane diol and 2,2-bis-(4-hydroxyphenyl) propane.

The impact modifier used in this invention is an elastomer highly grafted with a copolymer of an α-substituted acrylate with acrylic acid, methacrylic acid or a mixture thereof. The copolymer exhibits thermodynamic miscibility with the polybutylene terephthalate resin.

The elastomer component of the impact modifier has random dialkyl or alkyl aryl peroxide functionality. Any elastomer having pendant allylic, benzylic or conjugated unsaturation at levels within the range from about 1 to about 20 wt. % is suitable for use.

Particularly suitable elastomers are the olefin/α-olefin/nonconjugated diene terpolymers generally known as EPDM rubbers and butyl rubber. EPDM rubbers are preferred.

More specifically, the EPDM rubbers suitable for use in making the EPDM elastomer having random dialkyl or alkyl aryl functionality are based on mono olefins having the structural formula CH₂ = CHR in which R may be a hydrogen atom or a saturated alkyl group such as methyl, ethyl, n-propyl, isopropyl and the like. In addition, the EPDM rubbers are based on non-conjugated straight chain or cyclic diene hydrocarbons which are copolymerizable with the above mono olefins. Examples of suitable non-conjugated straight chain diene hydrocarbons copolymerizable with mono olefins are 1,4-pentadiene, 1,4-hexadiene, 1-5-hexadiene and the like. Examples of suitable cyclic diene hydrocarbons are bicyclo [2,2,1] hepta-2,5-diene, dicyclopentadiene and tetra cyclopentadiene. EPDM rubbers most preferred are terpolymer structures in which the mono olefins are ethylene and propylene, and the non-conjugated hydrocarbon diene is either 1,4-hexadiene or dicyclopentadiene. The EPDM rubber should comprise 1 to 15% by weight of the non-conjugated diene hydrocarbon and 85 to 99% by weight of the mono olefins. The preferred ratio of the mono olefins, i.e., ethylene and propylene, should be 20/80 to 80/20, preferably between 35/65 to 65/35. Ethylene-propylene-ethylidene norbornene is not suitable for use in the practice of this invention. Methods for making these EPDM rubbers are well known and thoroughly described in U.S. 3,000,866 and U.S. 3,000,867.

Peroxide functionality is imparted to the elastomer as follows. The elastomer is dissolved in a solvent, preferably at a temperature within the range of from about 60-80° C. The resulting rubber solution is then treated with an oxidizing agent in the presence of a catalyst. The oxidizing agent is an alkyl or aryl hydroperoxide, most preferably it is t-butyl hydroperoxide. The catalyst is selected from any metal in Group VIIa, VIII, Ib or IIb with the appropriate choice of counter ion so as to pronote solubility of the catalyst in the rubber solution The peroxidation reaction is run tor about 5 to about 20 hours at a temperature preferably within the range of from about 60 to about 80°C.

Suitable solvents for dissolving the elastomer include various aromatic solvents such as benzene, t-butylbenzene, toluene, xylenes, and halogenated benzenes such as chlorobenzene; however, most preferred are chlorobenzene and t-butylbenzene.

The catalyst employed to produce the peroxidized elastomer is based on metals of Group VIIa, VIII, Ib or IIb. The preferred metals are cobalt (Group VIII) or copper (Group Ib ). Preferred catalysts are Cobalt (II) acetate, cobalt (II) propionate, cobalt (II) acetyl acetonate, cobalt (II) 2-ethyl hexanoate, cobalt (II) naphthenate, copper (I) acetate, copper (I) chloride, copper (I) acetyl-acetonate, copper (I) naphthenate, or copper (I) ethylacetoacetate. Most preferred are cobalt (II) acetylacetonate, cobalt (II) naphthenate, copper (I) acetate, copper (I) chloride and copper (I) acetyl acetonate.

A peroxidized elastomer produced as described above typically exhibits 0.05 to 0.1 weight percent peroxide functionality which results in 40 to 60% grafting of the copolymer matrix.

The copolymer matrix which is grafted to the elastomer component comprises 70 to 95% of an α-substituted acrylate monomer and 5 to 30% of either acrylic acid, methacrylic acid or their mixtures. Preferred compositions are 70 to 90% of an α-substituted acrylate monomer and 10 to 30% of methacrylic acid. The copolymer matrix molecular weight should be 50,000 to 500,000 preferably 50,000 to 250,000.

The α-substituted acrylate monomer can be selected from ethyl methacrylate, n-propyl methacrylate or isopropylmethacrylate. Most preferred is ethyl methacrylate.

The resulting elastomer-g-copolymer matrix is comprised in weight percent of from about 50 to 90 elastomer and from about 10 to about 50 of the copolymer matrix. The most preferred composition is from about 50 to about 70 elastomer and from about 50 to about 30 copolymer matrix.

A molding composition according to this invention comprises in weight percent from 99 to 50 polybutylene terephthalate resin and from 1 to 50 of the elastomer-g-copolymer matrix. Preferably, the molding composition will comprise about 95 to about 60% polybutylene terephthalate resin and from about 5 to about 40% elastomer-g-copolymer matrix.

The elastomer-g-copolymer matrix is preferably stabilized prior to blending with polybutylene terephthalate resin with 2 weight percent of any conventional stabilizer. A preferred stabilizer is a 50:50 mixture of Ethanox® 330 (Ethyl Corp) [1,3,5-trimethyl-2,4,6-tris (3,5-di-tert butyl-4-hydroxy benzyl) benzene] and Mark® 2112 (Witco Chemical Corporation) tris (2,4-ditertbutyl-phenyl)phosphite.

The molding compositions of this invention can be molded using conventional molding equipment and the molding compositions can also include other ingredients such as extenders, processing aids, pigments, mold release agents, for their conventionally employed purpose. Also reinforcing fillers in amounts sufficient to impart reinforcement can be used, such as titanium dioxide, potassium titanate and titanate whiskers, glass flakes and chopped glass fibers.

The following examples serve to demonstrate the invention. Evaluation of material properties was performed based on the following ASTM standard tests: Flexural modulus (D-790), tensile strength (D-638), elongation (D-648), notched Izod (D-256) and DTUL (deflection temperature underload, 0.32 cm (1/8") at 1848 kPa (264 psi), (D-648). Gardner falling weight index was established using a 3.16 cm (1-1/4") diameter orifice and an 3.6 kg (8 pound) 1.27 cm (1/2") diameter weight. Glass transition temperature, melting temperature, and heat of fusion was determined by differential scanning calorimetry.

### Example 1

This example demonstrates the preparation of a peroxidized elastomer suitable for use in this invention.

In a 4-liter resin kettle 200 grams of an ethylene/propylene/dicyclopentadiene (EPDM) terpolymer were dissolved in. 2700 grams of chlorobenzene. The EPDM rubber dissolved readily in three and one-half hours by heating the solution to 70°C.

The resin kettle was charged with 120 grams of a 40% anhydrous t-butyl hydroperoxide in toluene solution.¹
1/ Prepared by extraction of a 70% t-butyl-hydroperoxide water solution with toluene according to the procedure described by K.B. Sharpless et al Journal of Organic Chemistry, 1983, 48 3607.

Immediately after the addition of the hydroperoxide solution, 20 grams of a 6% cobalt solution as cobaltous naphthenate in mineral spirits and 1.7 grams of cobaltous acetylacetonate dissolved in 22 milliliters of tetrahydrofuran were added. The reaction mixture was maintained at 70-72°C for 8 hours. The EPDM rubber was dried in vacuo at 25°C and then dissolved in toluene and precipitated into methanol a second time. The peroxidized rubber was dried in vacuo at 25°C for 48 hours. The level of peroxide functionality in the EPDM rubber was 1067 ppm.

### Example 2

Approximately 200 grams of peroxidized EPDM rubber having 1067 ppm peroxide functionality was prepared according to the procedure of Example 1. Next, the 200 grams of peroxidized EPDM were dissolved in 500 grams of chlorobenzene in a 3 pint pressure reaction vessel at 60°C.

The reaction vessel was charged with 200 grams of a comonomer mixture comprised of 164 grams of ethyl methacrylate and 36 grams of methacrylic acid. The vessel was heated to 140°C for four and one-half hours. The polymer mass obtained was precipitated in a four fold excess of methanol using a Waring Blender.

The polymer crumb obtained was dried under vacuum at 110°C. The total EPDM-g-ethyl methacrylate/methacrylic acid (EMA/MAA) recovered was 388 grams (97%). The final composition was 52% EPDM; 48% EMA/MAA.

The composition of the EMA/MAA was 82% ethyl methacrylate and 18% methacrylic acid. Soxhlet extraction of 25 grams of EPDM-g-EMA/MAA with methyl ethyl ketone for 170 hours revealed 6.8 grams of non-grafted EMA/MAA (56%) having a peak molecular weight 197,500; Mw of 242,300; and Mn of 134,000. The level of EMA/MAA grafted to the EPDM rubber was 44%. The glass transition temperature of both the grafted and non-grafted EMA/MAA was 120°C.

### Example 3

This example serves to illustrate the utility of the EPDM-g-EMA/MAA as an impact modifier for polybutylene terephthalate resins.

Three molding compositions having the formulations set forth in Table I were prepared and stabilized with 1.5 wt. % each of Mark® 2112 antioxidant and Ethanox® 330 antioxidant. The compositions were extruded, pelletized and test specimens injection molded for property analysis. Property values obtained are shown in Table I.

**TABLE I**

| Ingredient | Composition Amount in wt % | | | |
|---|---|---|---|---|
| Valox® 325 PBT | 100 | 80 | 70 | 60 |
| EPDM-g-EMA/MAA | 0 | 20 | 30 | 40 |

| Property Test | | | | |
|---|---|---|---|---|
| Tg (°C,DSC) | 62 | 66 | 72 | 77 |
| Tm (°C) | 229 | 227 | 228 | 226 |
| Tensile str (psi) MPa | (7,200) 49.7 | (7,100) 49.0 | (6,900) 47.6 | (65,200) 449.9 |
| Flex str (psi) MPa | (3,700) 25.5 | (12,100) 83.5 | (12,200) 84.2 | (10,300) 71.1 |
| Flex mod (psi) MPa | (340,000) 2346 | (341,000) 2352.9 | (343,000) 2366.7 | (295.000) 2035.5 |
| DTUL (1/8"°F) (264 psi) 0.32 cm, °C, 1.8 MPa | (126) 52 | (139) 59 | (148) 64 | (147) 64 |
| Notched izod (ft-lbs/in) kgFcm/cm | (1.0) 5.6 | (3.1) 17.4 | (8.7) 48.7 | (9.1) 51.0 |
| GFWI (in-lbs) Nm | (480+) 52.8 | (480+) 52.8 | (480+) 52.8 | (480+) 52.8 |
| Elongation (%) | 300 | 160 | 171 | 187 |

The above data illustrate that there exists thermodynamic miscibility between the EMA/MAA copolymer and the amorphous regions of the PBT resin. Moreover, the data show that the molded compounds of this invention possess excellent impact resistance as well as heat resistance.

It will be evident from the foregoing that various modifications can be made to this invention. Such, however, are considered as being within the scope of the invention.

Valox is a trade name which may be registered in some or all of the territories designated in this application.

## Claims

1. A moldable composition comprising
(i) a polyester resin
(ii) an elastomer other than ethylene-propylene-ethylidene norbornene elastomer grafted with a copolymer of monoethylenically unsaturated monomers, and optionally,
(iii) a reinforcing filler
characterised in that the polyester (i) is a polybutylene terephthalate polyester or a copolyester derived from 1,4-butane diol and terephthalic acid and one or more of isophthalic acid, ethylene glycol, 1,3-propane diol and 2,2-bis-(4-hydroxyphenyl)propane and the elastomer (ii) is grafted with from 40 to 60 weight percent of a copolymer comprising 70 to 95% of an α-substituted acrylate and 5 to 30% acrylic acid, methacrylic acid or a mixture thereof and wherein said elastomer has random dialkyl or alkyl aryl peroxide functionality and said copolymer is thermodynamically miscible with the polybutylene terephthalate resin or copolyester, said composition comprising 99 to 50% by weight of (i) and 1 to 50% by weight of (ii).

2. The composition of claim 1 in which the polybutylene terephthalate resin is a homopolymer.

3. The composition of claim 1 in which the polybutylene terephthalate resin is a copolyester.

4. The composition of claim 1, claim 2 or claim 3 in which said elastomer is selected from ethylene/propylene/1,4-hexadiene, ethylene/propylene/dicyclopentadiene, and butyl rubber.

5. The composition of any one of claims 1 to 4 in which said α-substituted acrylate is selected from the group consisting of ethyl methacrylate, n-propyl methacrylate and ispropyl methacrylate.

6. The composition of claim 5 in which said elastomer is ethylene/propylene/1,4-hexadiene and said copolymer is ethyl methacrylate/methacrylic acid copolymer, or said elastomer is ethylene/propylene/dicyclopentadiene and said copolymer is ethyl methacrylate/methacrylic acid copolymer, or said elastomer is ethylene/propylene/butyl rubber and said copolymer is ethyl methacrylate/methacylic acid copolymer.

7. The composition of any one of claims 1 to 6 in which said elastomer grafted with copolymer is present in an amount within the range of from 1 to 50 weight percent and said polybutylene terephthalate resin is present in an amount within the range of from 50 to 99 weight percent.

8. A method of producing a molded composition which comprises forming a composition according to claim 1, and molding the resulting blend, optionally in contact with a reinforcing filler.

9. A molded composition comprising a continuous phase comprising a polyester resin and a disperse phase comprising an elastomer grafted with a copolymer of monoethylenically unsaturated monomers, said polyester resin and elastomer grafted with monoethylenically unsaturated monomers being as defined in claim 1, said copolymer being thermodynamically miscible with said polyester resin and being part of the continuous phase, and said elastomer grafted with copolymer being present in an amount sufficient to improve the impact resistance of the polybutylene terephthalate resin upon molding.

10. A method of improving the impact resistance of a polyester resin upon molding which comprises incorporating into a continuous phase comprising said polyester resin a disperse phase comprising an elastomer grafted with a copolymer of monoethylenically unsaturated monomers, said polyester resin and elastomer grafted with monoethylenically unsaturated monomers being as defined in claim 1, said copolymer thermodynamically miscible with said polyester resin and being part of the continuous phase, and said elastomer grafted with copolymer being present in an amount sufficient to improve the impact resistance of the polybutylene terephthalate resin upon molding.

## Patentansprüche

1. Formbare Zusammensetzungen enthaltend:
(i) ein Polyesterharz
(ii) ein von Ethylen-Propylen-Ethylidennorbornenelastomer verschiedenes Elastomer gepfropft mit einem Copolymer von monoethylenisch ungesättigten Monomeren, und gegebenenfalls,
(iii) ein Verstärkungsmaterial,
**dadurch gekennzeichnet,** daß der Polyester (i) ein Polybutylenterephthalat-polyester oder ein Copolyester erhalten von 1,4-Butandiol und Terephthalsäure und einer oder mehrerer von Isophthalsäure, Ethylenglycol, 1,3-Propandiol und 2,2-Bis-(4-Lydroxyphenyl) propan ist und das Elastomer (ii) mit 40 bis 60 Gew.-% eines Copolymers enthaltend 70 bis 95 % eines α-substituierten Acrylates und 5 bis 30 % Acrylsäure, Methacrylsäure oder eine Mischung davon gepfropft ist und worin das Elastomer ungeordnete Dialkyl- oder Alkylarylperoxidfunktionalität aufweist, und das Copolymer thermodynamisch mit dem Polybutylenterephthalatharz oder Copolyester mischbar ist, wobei die Zusammensetzung 99 bis 50 Gew.-% von (i) und 1 bis 50 Gew.-% von (ii) enthält.

2. Zusammensetzung nach Anspruch 1, in der das Polybutylenterephthalatharz ein Homopolymer ist.

3. Zusammensetzung nach Anspruch 1, in der das Polybutylenterephthalatharz ein Copolyester ist.

4. Zusammensetzung nach Anspruch 1, 2 oder 3, in der das Elastomer aus Ethylen/Propylen/1,4-Hexadien, Ethylen/Propylen/Dicyclopentadien und Butylkautschuk ausgewählt ist.

5. Zusammensetzung nach einem der Ansprüche 1 bis 4, in dem das α-substituierte Acrylat aus der Gruppe bestehend aus Ethylmethycrylat, n-Propylmethacrylat und Isopropylmethacrylat ausgewählt ist.

6. Zusammensetzung nach Anspruch 5, in der das Elastomer Ethylen/Propylen/1,4-Hexadien ist und das Copolymer Ethylmethacrylat/Methacrylsäurecopolymer ist oder das Elastomer Ethylen/Propylen/Dicyclopentadien und das Copolymer Ethylmethacrylat/Methacrylsäurecopolymer ist oder das Elastomer Ethylen/Propylen/Butylkautschuk und das Copolymer Ethylmethacrylat/Methacrylsäurecopolymer ist.

7. Zusammensetzung nach einem der Ansprüche 1 bis 6, in der das Elastomer, das mit einem Copolymer gepfropft in einer Menge innerhalb des Bereiches von 1 bis 50 Gew.-% und das Polybutylenterephthalatharz in einer Menge innerhalb des Bereiches von 50 bis 99 Gew.-% vorhanden ist.

8. Verfahren zur Herstellung einer geformten Zusammensetzung, bei dem man eine Zusammensetzung nach Anspruch 1 herstellt und die erhaltene Mischung gegebenenfalls in Kontakt mit einem Verstärkungsmaterial, formt.

9. Geformte Zusammensetzung enthaltend eine kontinuierliche Phase, die ein Polyesterharz enthält und eine disperse Phase, die ein Elastomer enthält, das mit einem Copolymer von monoethylenisch ungesättigten Monomeren gepfropft ist, wobei das Polyesterharz und das Elastomer und das mit den monoethylenisch ungesättigten Monomeren gepfropft ist, die in Anspruch 1 angegebene Definition aufweisen, wobei das Copolymer thermodynamisch mit dem Polyesterharz mischbar ist und ein Teil der kontinuierlichen Phase darstellt und wobei das Elastomer, das mit dem Copolymer gepfropft ist, in einer Menge vorhanden ist, die ausreicht, um die Kerbschlagzähigkeit des Polybutylenterephthalatharzes bei der Formung zu erhöhen.

10. Verfahren zur Erhöhung der Kerbschlagzähigkeit eines Polyesterharzes bei der Formung, bei dem man in eine kontinuierliche Phase, die ein Polyesterharz enthält eine disperse Phase, die ein Elastomer gepfropft mit einem Copolymer von monoethylenischen ungesättigten Monomeren enthält, inkorporiert, wobei das Polyesterharz und das Elastomer gepfropft mit monoethylenisch ungesättigten Monomeren die in Anspruch 1 gegebene Definition aufweisen, wobei das Copolymer thermodynamisch mit dem Polyesterharz mischbar ist und Teil der kontinuierlichen Phase ist, und das Elastomer gepfropft mit dem Copolymer in einer Menge vorhanden ist, die ausreicht, um die Kerbschlagzähigkeit des Polybutylenterephthalatharzes bei Formung zu erhöhen.

## Revendications

1. Composition à mouler comprenant :
(i) une résine polyester,
(ii) un élastomère, autre qu'un élastomère éthylène-propylène-éthylidène norbornène, greffé avec un copolymère de monomères insaturés éthyléniquement, et éventuellement,
(iii) une charge de renforcement,
caractérisée en ce que le polyester (i) est un polyester de polytéréphtalate de butylène ou un copolyester dérivé de 1,4-butane diol et d'acide téréphtalique et d'un ou de plusieurs composés parmi l'acide isophtalique, l'éthylène glycol, le 1,3-propane diol et le 2,2-bis-(4-hydroxyphényl)propane, et l'élastomère (ii) est greffé avec 40 à 60% en poids d'un copolymère comprenant 70 à 95% d'un acrylate α-substitué et 5 à 30% d'acide acrylique, d'acide méthacrylique ou d'un mélange de ceux-ci, et dans laquelle cet élastomère a une fonctionalité statistique peroxyde de dialkyle ou d'alkyl aryle, et ce copolymère est miscible thermodynamiquement au polytérephtalate de butylène ou au polyester, cette composition comprenant 99 à 50% en poids de (ii) et 1 à 50% en poids de (ii).

2. Composition suivant la revendication 1, dans laquelle le polytéréphtalate de butylène est un homopolymère.

3. Composition suivant la revendication 1, dans laquelle le polytéréphtalate de butylène est un copolyester.

4. Composition suivant l'une quelconque des revendications 1, 2 ou 3, dans laquelle cet élastomère est choisi parmi un élastomère éthylène/propylène/1,4-hexadiène, éthylène/propylène/dicyclopentadiène et un caoutchouc butyle.

5. Composition suivant l'une quelconque des revendications 1 à 4, dans laquelle cet acrylate α-substitué est choisi dans le groupe consistant en méthacrylate d'éthyle, méthacrylate de n-propyle et méthacrylate d'isopropyle.

6. Composition suivant la revendication 5, dans laquelle cet élastomère est un élastomère éthylène/propylène/ 1,4-hexadiène et ce copolymère est un copolymère méthacrylate d'éthyle/acide méthacrylique ou cet élastomère est un élastomère éthylène/propylène/dicyclopentadiène et ce copolymère est un copolymère méthacrylate d'éthyle/acide méthacrylique ou cet élastomère est un élastomère éthylène/propylène/caoutchouc butyle et ce copolymère est un copolymère méthacrylate d'éthyle/acide méthacrylique.

7. Composition suivant l'une quelconque des revendications 1 à 6, dans laquelle cet élastomère greffé avec un copolymère est présent en une quantité de l'ordre de 1 à 50% en poids et ce polytéréphatalate de butylène est présent en une quantité de l'ordre de 50 à 99% en poids.

8. Procédé pour produire une composition à mouler, qui comprend la formation d'une composition suivant la revendication 1 et le moulage du mélange résultant, éventuellement en contact avec une charge de renforcement.

9. Composition moulée comprenant une phase continue comprenant un polyester et une phase dispersée comprenant un élastomère greffé avec un copolymère de monomères insaturés éthyléniquement, ce polyester et cet élastomère greffé avec des monomères insaturés éthyléniquement étant tels que définis dans la revendication 1, ce copolymère étant miscible thermodynamiquement avec ce polyester et formant une partie de la phase continue, et cet élastomère greffé avec le copolymère étant présent en une quantité suffisante pour améliorer la résistance au choc du polytéréphtalate de butylène après moulage,

10. Procédé pour améliorer la résistance au choc d'un polyester après moulage, qui comprend l'incorporation dans une phase continue comprenant ce polyester d'une phase dispersée comprenant un élastomère greffé avec un copolymère de monomères insaturés éthyléniquement, ce polyester et cet élastomère greffé avec des monomères insaturés éthyléniquement étant tels que définis dans la revendication 1, ce copolymère étant miscible thermodynamiquement avec ce polyester et formant une partie de la phase continue, et cet élastomère greffé avec un copolymère étant présent en une quantité suffisante pour améliorer la résistance au choc du polytéréphtalate de butylène après moulage.
